# EUROPÄISCHE PATENTSCHRIFT

(11) **EP 3 755 562 B1**
(45) Veröffentlichungstag und Bekanntmachung des Hinweises auf die Patenterteilung: **19.01.2022**
(21) Anmeldenummer: 19704723.6
(22) Anmeldetag: 22.01.2019
(51) Int. Cl.: B60K 6/387, F16D 13/52, F16D 25/0638

(54) **REIBKUPPLUNG FÜR EINEN ANTRIEBSSTRANG EINES KRAFTFAHRZEUGS MIT EINER DURCH ZUMINDEST EIN VERBINDUNGSMITTEL GEBILDETEN BETÄTIGUNGSFLÄCHE**
FRICTION CLUTCH FOR A DRIVETRAIN OF A MOTOR VEHICLE HAVING AT LEAST AN ACTUATING SURFACE FORMED BY AT LEAST ONE CONNECTING MEANS
EMBRAYAGE À FRICTION POUR UNE CHAÎNE CINÉMATIQUE D'UN VÉHICULE AUTOMOBILE PRÉSENTANT UNE SURFACE D'ACTIONNEMENT FORMÉE PAR AU MOINS UN MOYEN DE CONNEXION

(30) Priorität: 22.02.2018 DE 102018103982; 05.04.2018 DE 102018108046
(43) Veröffentlichungstag der Anmeldung: 30.12.2020
(73) Patentinhaber: Schaeffler Technologies AG & Co. KG, 91074 Herzogenaurach (DE)
(72) Erfinder: HAMMERSTIEL, Fabian, 76189 Karlsruhe (DE); RABER, Christoph, 66564 Ottweiler-Steinbach (DE); FINKENZELLER, Marc, 77723 Gengenbach (DE); RÖLL, Marcel, 77833 Ottersweier (DE); VOGEL, Florian, 77815 Bühl (DE); ASCHOFF, Michael, 77815 Bühl (DE)
(86) Internationale Anmeldenummer: PCT/DE2019/100066
(87) Internationale Veröffentlichungsnummer: WO 2019/161830

(56) Entgegenhaltungen:
- CN-A- 105 422 679
- DE-T5-112013 000 295
- US-A1- 2012 111 145

## Beschreibung

Die vorliegende Erfindung betrifft eine Reibkupplung für einen Antriebsstrang eines Kraftfahrzeugs. Reibkupplungen dienen in Antriebssträngen von Kraftfahrzeugen, wie beispielsweise Personenkraftwagen, Lastkraftwagen oder Krafträdern, dem Ausgleich einer Antriebsdrehzahl und einer Getriebedrehzahl insbesondere während Anfahrvorgängen des Kraftfahrzeugs. Solche Reibungskupplungen sind aus den Druckschriften US 2012/111145 A1 und CN 105 422 679 A bekannt.

Bekannte Reibkupplungen sind durch eine Betätigungsvorrichtung, wie zum Beispiel einen Zentralausrücker, betätigbar, insbesondere ausrückbar und/oder einrückbar. Hierzu ist in der Reibkupplung eine Betätigungsfläche ausgebildet, über die die Reibkupplung durch die die Betätigungsvorrichtung betätigbar ist. Da Reibkupplungen aus einer Vielzahl von Bauteilen bestehen, deren Maße Toleranzen unterliegen, unterliegt die Lage der Betätigungsfläche einer hohen Schwankung. In ungünstigsten Fällen kann es zu einem erheblichen Mehrweg der Betätigungsvorrichtung kommen, bevor diese bei der Betätigung der Reibkupplung gegen einen Endanschlag der Reibkupplung stößt. Dieser Mehrweg der Betätigungsvorrichtung resultiert in der Reibkupplung in einem Mehrweg der einzelnen Komponenten, der, um eine Kollision der einzelnen Komponenten untereinander zu verhindern, mit zusätzlichen Bauraum entsprechend vorgehalten werden muss. Hierdurch erhöht sich die Größe der Reibkupplung. Aufgabe der Erfindung ist es daher, die mit Bezug auf den Stand der Technik geschilderten Probleme zumindest teilweise zu lösen und insbesondere eine Reibkupplung für einen Antriebsstrang eines Kraftfahrzeugs mit insbesondere einem Hybridantrieb anzugeben, die besonders kompakt ausbildbar ist. Zudem soll auch ein Verfahren zur Herstellung einer entsprechenden Reibkupplung angegeben werden, mit dem die Reibkupplung besonders kompakt herstellbar ist.

Diese Aufgaben werden gelöst mit einer Reibkupplung und einem Verfahren gemäß den Merkmalen der unabhängigen Ansprüche. Weitere vorteilhafte Ausgestaltungen der Erfindung sind in den abhängig formulierten Ansprüchen angegeben. Es ist darauf hinzuweisen, dass die in den abhängigen Ansprüchen einzeln aufgeführten Merkmale in beliebiger technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Hierzu trägt eine Reibkupplung für einen Antriebsstrang eines Kraftfahrzeugs bei, die zumindest die folgenden Komponenten aufweist:
- ein Eingangsteil mit einem durch zumindest einen Antriebsmotor um eine Drehachse drehbaren Außenlamellenträger, wobei an dem Außenlamellenträger zumindest eine Außenlamelle befestigt ist;
- ein Ausgangsteil mit einem Rotorträger und einem von dem Rotorträger getrennten Innenlamellenträger, wobei an dem Innenlamellenträger zumindest eine Innenlamelle befestigt ist;
- zumindest eine Federeinrichtung, mit der die zumindest eine Außenlamelle und die zumindest eine Innenlamelle zum Schließen der Reibkupplung mit einer Anpresskraft verspannbar sind; und
- einen Drucktopf, der mit zumindest einem Verbindungsmittel mit dem Innenlamellenträger verbunden ist, wobei das zumindest eine Verbindungsmittel eine Betätigungsfläche aufweist, über die die Reibkupplung mit einer Betätigungsvorrichtung betätigbar ist.

Die vorgeschlagene (trockene) Reibkupplung, vorzugsweise die trockene Lamellenkupplung, ist für einen Antriebsstrang eines Kraftfahrzeugs, beispielsweise eines Personenkraftwagens, Lastkraftwagens und/oder Kraftrads, vorgesehen. Solche Kraftfahrzeuge weisen regelmäßig zumindest einen Antriebsmotor zum Antreiben des Kraftfahrzeugs auf. Bei dem zumindest einen Antriebsmotor kann es sich insbesondere um einen Hybridmotor handeln, der sowohl einen Verbrennungsmotor als auch zumindest einen Elektroantrieb zum Antrieb des Kraftfahrzeugs aufweist. Der zumindest eine Elektromotor kann beispielsweise mit einer Betriebsspannung von 24 V (Volt) oder 48 V betreibbar sein. Weiterhin weisen solche Kraftfahrzeuge regelmäßig ein Getriebe auf, das beispielsweise als Automatikgetriebe oder ein von einem Fahrer manuell geschaltetes Schaltgetriebe ausgebildet sein kann.

Die Reibkupplung umfasst ein um eine Drehachse mittels des Antriebsmotors verdrehbar angeordnetes, antriebsseitiges Eingangsteil, das direkt oder indirekt beispielsweise mit einer Kurbelwelle des Antriebsmotors bzw. des Verbrennungsmotors des Hybridantriebs verbindbar ist. Weiterhin umfasst die Reibkupplung ein gegenüber dem Eingangsteil koaxial und um die Drehachse verdrehbar angeordnetes Ausgangsteil, das beispielsweise mit einer Getriebeeingangswelle des Getriebes indirekt oder direkt verbindbar ist. Das Ausgangsteil weist ferner einen Rotorträger auf, der mit einem Rotor des Elektromotors eines Hybridantriebs verbindbar ist und/oder durch den Elektromotor um die Drehachse antreibbar ist. Der Elektromotor kann koaxial zu der Drehachse der Reibkupplung bzw. zu der Drehachse des Rotorträgers angeordnet sein, sodass der Rotor des Elektromotors den Rotorträger umgibt. Der Rotorträger kann beispielsweise über eine Verzahnung an einer Umfangsfläche des Rotorträgers mit dem Rotor des Elektromotors verbunden sein. Weiterhin kann der Elektromotor parallel zu der Drehachse der Reibkupplung bzw. der Drehachse des Rotorträgers angeordnet sein. In diesem Fall kann der Elektromotor eine Riemenscheibe antreiben, die die Reibkupplung zumindest teilweise umgibt.

Somit ist die Reibkupplung in ein Hybridmodul zum Ankoppeln eines Verbrennungsmotors an den Antriebsstrang des Kraftfahrzeugs bzw. zum Abkoppeln des Verbrennungsmotors von dem Antriebsstrang des Kraftfahrzeugs integriert, d.h. die Reibkupplung bildet eine K0-Kupplung. Bei dem Hybridmodul kann es sich um ein Hybridmodul mit koaxialem Elektromotor, dessen Rotor die K0-Kupplung umgibt, oder um ein Hybridmodul mit achsparallelem Elektromotor, der eine Riemenscheibe antreibt, die die K0-Kupplung umgibt, handeln. Im letztgenannten Fall ist diese Riemenscheibe aus dem Rotorträger und dem Rotor einteilig ausgebildet, oder die Riemenscheibe wird vom Rotorträger getragen, d.h. ist in dessen Außenumfang auf den Rotorträger aufgezogen.

Zwischen dem Eingangsteil und dem Ausgangsteil ist eine in eine Umfangsrichtung um die Drehachse wirksame, zwischen einer Offenstellung und Schließstellung schaltbare Reibeinheit vorgesehen. Die Reibeinheit umfasst zumindest eine mit einem Außenlamellenträger des Eingangsteils verdrehfest verbundene Außenlamelle und zumindest eine mit einem Innenlamellenträger des Ausgangsteils verdrehfest verbundene Innenlamelle. Die zumindest eine Außenlamelle kann über eine Verzahnung mit dem Außenlamellenträger und/oder die zumindest eine Innenlamelle über eine Verzahnung mit dem Innenlamellenträger verbunden sein. Der Innenlamellenträger ist insbesondere ringförmig, zumindest teilweise rohrförmig, zumindest teilweise aus Stahl gefertigt und/oder weist einen L-förmigen Querschnitt auf. Weiterhin ist der Innenlamellenträger von dem Rotorträger getrennt. Dies bedeutet, dass der Innenlamellenträger in einer Umfangsrichtung um die Drehachse nicht direkt bzw. unmittelbar mit dem Rotorträger verdrehfest gekoppelt ist. Weiterhin kann der Innenlamellenträger in einer axialen Richtung, d. h. parallel zu der Drehachse, gegenüber dem Rotorträger begrenzt verlagerbar ausgebildet sein.

Die Reibkupplung weist einen Drucktopf auf, mit dem der Innenlamellenträger mittels zumindest eines Verbindungsmittels fest verbunden ist. Über den Drucktopf ist die Reibkupplung betätigbar. Weiterhin kann über den Drucktopf eine von zumindest einer Federeinrichtung erzeugte Anpresskraft auf die zumindest eine Außenlamelle und die zumindest eine Innenlamelle übertragbar sein. Die zumindest eine Federeinrichtung drückt insbesondere von einer Motorseite der Reibkupplung auf den Drucktopf, sodass der Drucktopf die Anpresskraft auf den Innenlamellenträger überträgt. Die Reibkupplung ist mit einer Betätigungsvorrichtung, beispielsweise nach Art eines Zentralausrückers, ausrückbar, indem die Betätigungseinrichtung eine der Anpresskraft entgegenwirkende Betätigungskraft über eine Betätigungsfläche des zumindest einen Verbindungsmittels auf den Drucktopf erzeugt. Durch die Ausrückkraft ist der Drucktopf begrenzt in der axialen Richtung verlagerbar. Das zumindest eine Verbindungsmittel kann einen Bolzen umfassen. Durch die Ausbildung der Betätigungsfläche an das zumindest eine Verbindungsmittel können Maßtoleranzen der einzelnen Komponenten der Reibkupplung kompensiert werden, indem diese durch eine angepasste Ausgestaltung des zumindest einen Verbindungsmittels ausgeglichen werden. Insbesondere kann durch eine gezielte Anpassung des zumindest einen Verbindungsmittels, beispielsweise durch Anpassung der Länge und/oder Lage des zumindest einen Verbindungsmittels, eine Betätigungsflächenhöhe der Betätigungsfläche (in Abhängigkeit der zuvor gemessenen Maßtoleranzen der einzelnen Komponenten der Reibkupplung) auf eine definierte Soll-Betätigungsflächenhöhe eingestellt werden. Hierdurch muss in der Reibkupplung kein zusätzlicher Bauraum für einen Mehrweg der Betätigungsvorrichtung mehr vorgesehen werden, sodass die Reibkupplung besonders kompakt ausgestaltet werden kann. Bei der Betätigungsflächenhöhe kann es sich beispielsweise um einen Abstand der Betätigungsfläche von einer Stirnfläche einer Nabe der Reibkupplung in der axialen Richtung handeln. Die Nabe kann der (direkten oder indirekten) Verbindung der Reibkupplung mit einer Getriebeeingangswelle des Getriebes oder einer Zwischenwelle dienen und/oder Teil des Ausgangsteils der Reibkupplung sein. Zwischen dem Innenlamellenträger und dem Drucktopf kann eine Modulationsfeder angeordnet sein. Die Modulationsfeder kann ein festes Ende und ein freies Ende aufweisen, wobei das feste Ende insbesondere mit dem Innenlamellenträger verbunden ist. Das freie Ende ragt in der axialen Richtung von dem Innenlamellenträger insbesondere in Richtung des Drucktopfs. Auf diese Weise kann bei Bereitstellung der Anpresskraft das Einkuppeln der Reibkupplung sanfter ausgestaltet werden. Weiterhin ist die zumindest eine Innenlamelle nicht (direkt) mit dem Rotorträger verbunden. Die zumindest eine Außenlamelle und die zumindest eine Innenlamelle können in einer axialen Richtung, d. h. insbesondere parallel zu der Drehachse, zu einem Lamellenpaket abwechselnd geschichtet angeordnet sein. Weiterhin sind die zumindest eine Außenlamelle und/oder die zumindest eine Innenlamelle insbesondere ringförmig und/oder zumindest teilweise aus Stahl gefertigt. Zudem können die zumindest eine Außenlamelle und/oder die zumindest eine Innenlamelle Reibbeläge aufweisen.

Die zumindest eine Außenlamelle und die zumindest eine Innenlamelle sind zum Schließen bzw. Einrücken der Reibkupplung durch eine Anpresskraft zumindest einer Federeinrichtung verspannbar bzw. in Reibeingriff bringbar. Bei der zumindest einen Federeinrichtung handelt es sich insbesondere um eine Tellerfeder. Die Reibkupplung ist durch die zumindest eine Federeinrichtung insbesondere normal-eingerückt.

Ferner kann die Reibkupplung folgende Komponenten aufweisend:
- eine Abstandslamelle, mittels der die zumindest eine Außenlamelle und die zumindest eine Innenlamelle in einer axialen Richtung von dem Rotorträger beabstandet sind; und
- zumindest eine Blattfeder, die mit dem Innenlamellenträger und dem Rotorträger derart verbunden ist, dass die zumindest eine Blattfeder bei Einleitung eines Drehmoments durch den Antriebsmotor die Anpresskraft mit einer Verstärkungskraft verstärkt.

Die Abstandslamelle kann formschlüssig mit dem Rotorträger verbunden sein. Durch die formschlüssige Verbindung der Abstandslamelle mit dem Rotorträger ist ein an der Abstandslamelle anliegendes Drehmoment des Antriebsmotors an den Rotorträger übertragbar. Weiterhin kann die Abstandslamelle durch die formschlüssige Verbindung mit dem Rotorträger gegen ein Verdrehen relativ zu dem Rotorträger gesichert sein. Weiterhin ist mittels der Abstandslamelle die zumindest eine Außenlamelle und die zumindest eine Innenlamelle in einer axialen Richtung von dem Rotorträger beabstandet. Die zumindest eine Blattfeder kann mit dem Innenlamellenträger und dem Rotorträger derart verbunden sein, dass die zumindest eine Blattfeder bei Einleitung eines Drehmoments durch den Antriebsmotor bzw. den Verbrennungsmotor des Hybridantriebs die Anpresskraft mit einer Verstärkungskraft verstärkt wird. Dies wird dadurch erreicht, dass die zumindest eine Blattfeder zwischen dem Innenlamellenträger und dem Rotorträger aufgestellt ist bzw. mit einem Aufstellwinkel angeordnet ist. Dies bedeutet insbesondere, dass die zumindest eine Blattfeder zumindest teilweise nicht parallel zu der axialen Richtung und/oder der radialen Richtung verläuft. Aufgrund des Aufstellwinkels resultiert das über den Innenlamellenträger in die zumindest eine Blattfeder eingeleitete Drehmoment in einer Kraft mit einer axialen Richtungskomponente. Die axiale Richtungskomponente der Kraft stellt eine Verstärkungskraft dar, die insbesondere in der gleichen Richtung wie die Anpresskraft der zumindest einen Federeinrichtung wirkt und diese somit verstärkt. Die Reibkupplung kann eine Mehrzahl von übereinandergeschichteten Blattfedern in Form zumindest eines Blattfederpakets aufweisen. Wird von dem Antriebsmotor ein Zugmoment über den Außenlamellenträger und die zumindest eine Außenlamelle an die zumindest eine Innenlamelle und den Innenlamellenträger übertragen, überträgt der Innenlamellenträger dieses Zugmoment über die zumindest eine aufgestellte Blattfeder an den Rotorträger. Durch den Aufstellwinkel der zumindest einen Blattfeder wird durch das übertragene Drehmoment die Verstärkungskraft in der axialen Richtung erzeugt. Die Verstärkungskraft wirkt insbesondere in Richtung einer Getriebeseite auf den Innenlamellenträger. Da die Anpresskraft der zumindest einen Federeinrichtung ebenfalls auf den Innenlamellenträger wirken kann, wird die durch die zumindest einer Federeinrichtung erzeugte Anpresskraft über die in Richtung Getriebeseite wirkende Verstärkungskraft der zumindest einen Blattfeder verstärkt. Hierdurch sind Anpresskraftverluste kompensierbar.

Die Anpresskraft kann, insbesondere auf der Getriebeseite, durch die Abstandslamelle abgestützt sein. Die Abstandslamelle dient sowohl als Endlamelle in der Reibkupplung, die verhindert, dass der Rotorträger selbst als Reibfläche dient, als auch als Abstandshalter des Lamellenpakets, d. h. der zumindest einen Außenlamelle und der zumindest einen Innenlamelle, zum Rotorträger, um die zumindest eine aufgestellte Blattfedern zwischen dem Lamellenpaket und dem Rotorträger unterbringen zu können. Verbunden ist die zumindest eine Blattfeder insbesondere auf einer Getriebeseite der Reibkupplung mit dem Rotorträger und auf einer Motorseite der Reibkupplung mit dem Innenlamellenträger. Durch die Anbindung der Blattfedern getriebeseitig am Rotorträger und motorseitig am Innenlamellenträger wird die zumindest eine Blattfeder bei der Nutzung der Verstärkungsfunktion auf Zug belastet. Gegenüber einer Belastung auf Schub zur Nutzung der Verstärkungsfunktion hat dies für die zumindest eine Blattfeder erhebliche Vorteile hinsichtlich ihrer Dimensionierung. Auf Zug belastete Blattfedern können bei gleicher Belastung erheblich kleiner dimensioniert werden.

Der Innenlamellenträger ist drehfest mit einem Drucktopf verbunden , über den die Reibkupplung betätigbar ist. Die Abstandslamelle kann die Anpresskraft abstützen. Weiterhin kann die Abstandslamelle einen Aufnahmeraum für die zumindest eine Blattfeder bilden. Die zumindest eine Blattfeder ist insbesondere vollständig in dem Aufnahmeraum angeordnet. Zudem kann sich der Innenlamellenträger in den Aufnahmeraum erstrecken. Die Abstandslamelle kann einen rohrförmigen Abschnitt und einen flanschartigen Abschnitt aufweisen. Die Abstandslamelle ist dabei insbesondere einstückig ausgebildet. Die Verstärkungskraft kann in eine axiale Richtung gerichtet sein. Die Verstärkungskraft kann in Richtung einer Getriebeseite der Reibkupplung gerichtet sein. Die zumindest eine Blattfeder kann beim Verstärken der Anpresskraft mit der Verstärkungskraft auf Zug beansprucht sein. Hierdurch kann die zumindest eine Blattfeder kleiner und damit mit einem geringeren Gewicht ausgebildet werden. Die zumindest eine Blattfeder kann mit dem Innenlamellenträger vernietet sein. Die zumindest eine Blattfeder ist insbesondere an einem ersten längsseitigen Ende mit dem Innenlamellenträger vernietet. Die zumindest eine Blattfeder ist insbesondere an einem dem ersten längsseitigen Ende gegenüberliegenden zweiten längsseitigen Ende mit dem Rotorträger verdrehfest bzw. momentenschlüssig verbunden und/oder vernietet. Die zumindest eine Blattfeder kann in einer axialen Richtung neben der Abstandslamelle angeordnet sein. Insbesondere ist die zumindest eine Blattfeder nicht radial innerhalb des Innenlamellenträgers und/oder der Abstandslamelle angeordnet. Ein Querschnitt des Innenlamellenträgers kann insbesondere L-förmig ausgebildet sein.

Die Abstandslamelle kann zumindest eine Nase aufweisen, die in zumindest eine Aussparung des Rotorträgers eingreift. Die Abstandslamelle weist bevorzugt eine Mehrzahl von Nasen auf, die in einer Umfangsrichtung um die Drehachse verteilt angeordnet sind. Die zumindest eine Nase kann sich in die axiale Richtung erstrecken und/oder an einer Unterseite der Abstandslamelle angeordnet sein. Bei der zumindest einen Aussparung handelt es sich insbesondere um eine Öffnung des Rotorträgers. Die zumindest eine Aussparung erstreckt sich bevorzugt vollständig durch den Rotorträger. Die zumindest eine Nase greift derart in die zumindest eine Aussparung ein, dass die Abstandslamelle formschlüssig mit dem Rotorträger verbunden und gegen ein Verdrehen relativ zu dem Rotorträger gesichert ist. Die zumindest eine Nase kann die Abstandslamelle in der Reibkupplung zentrieren. Dies bedeutet insbesondere, dass die Abstandslamelle durch die zumindest eine Nase koaxial zu dem Rotorträger ausrichtbar bzw. anordenbar ist. Die zumindest eine Nase kann sich in die axiale Richtung erstrecken. Die zumindest eine Aussparung kann sich in die axiale Richtung erstrecken. Der Außenlamellenträger kann mit einem Lager verdrehbar an einer Nabe befestigt sein, wobei ein Lagersitz des Lagers zumindest teilweise durch einen Mitnehmerzahnkranz des Eingangsteils gebildet ist. Bei dem Lager handelt es sich insbesondere um ein Wälzlager oder Rollenlager. Die Nabe kann zumindest teilweise rohrförmig ausgebildet sein, der (direkten oder indirekten) Verbindung der Reibkupplung mit einer Getriebeeingangswelle des Getriebes oder einer Zwischenwelle dienen und/oder Teil des Ausgangsteils der Reibkupplung sein. Das Lager kann einen Innenring und Außenring aufweisen. Das Lager sitzt insbesondere in dem Mitnehmerzahnkranz. Dies kann bedeuten, dass das Lager den Mitnehmerzahnkranz (direkt), insbesondere mit dem Außenring, kontaktiert. Das Lager kann ferner, insbesondere mit dem Innenring, auf der Nabe angeordnet sein. Der Mitnehmerzahnkranz kann eine innere oder äußere Verzahnung aufweisen, über die ein Drehmoment von dem Antriebsmotor auf das Eingangsteil der Reibkupplung übertragbar ist. Der Lagersitz des Lagers kann zumindest teilweise durch den Mitnehmerzahnkranz und den Außenlamellenträger gebildet sein. Dies bedeutet, dass der Lagersitz des Lagers auch durch den Außenlamellenträger gebildet sein kann. Der Mitnehmerzahnkranz und der Außenlamellenträger sind hierzu bevorzugt in der axialen Richtung (unmittelbar) benachbart angeordnet. Ein Innendurchmesser des Mitnehmerzahnkranzes kann einem Außendurchmesser des Lagers entsprechen. Zwischen dem Innendurchmesser des Mitnehmerzahnkranzes und dem Außendurchmesser des Lagers kann eine Presspassung ausgebildet sein. Das Lager kann zweireihig ausgebildet sein. Bei einem zweireihigen Lager können Wälzkörper des Lagers in zwei (in der axialen Richtung) benachbarten ringförmigen Wälzkörperbahnen laufen. Das Lager kann in der axialen Richtung durch eine Zentralschraube abgestützt sein, mittels der eine Nabe der Reibkupplung an einer Welle fixierbar ist. Bei der Welle kann es sich insbesondere um eine Zwischenwelle handeln, über die das Drehmoment auf die Getriebeeingangswelle des Getriebes leitbar ist. Die Zentralschraube kann insbesondere auf einer Stirnseite der Nabe und/oder koaxial zur Nabe an der Reibkupplung festschraubbar sein. Die Zentralschraube stützt insbesondere den Innenring des Lagers in der axialen Richtung ab. Dies bedeutet insbesondere, dass die Zentralschraube den Innenring kontaktiert, sodass das Lager in der axialen Richtung relativ zu der Nabe nicht bewegbar ist. Hierdurch kann eine Sicherung des Lagers durch einen Sicherungsring entfallen.

Bei dem zumindest einen Verbindungsmittel kann es sich um einen Niet oder eine Schraube handeln.

Die Betätigungsfläche kann orthogonal zu der Drehachse verlaufen.

Die Betätigungsfläche kann eine Betätigungsflächenhöhe aufweisen, die einstellbar ist. Hierzu kann die Reibkupplung beispielsweise ein Gewinde aufweisen, über das das zumindest eine Verbindungsmittel, insbesondere in der axialen Richtung, verstellbar ist.

Einem weiteren Aspekt der Erfindung folgend wird auch ein Verfahren zur Herstellung einer erfindungsgemäßen Reibkupplung vorgeschlagen, wobei ein Drucktopf mit einem Innenlamellenträger über zumindest ein Verbindungsmittel verbunden ist, wobei das zumindest eine Verbindungsmittel eine Betätigungsfläche aufweist, über die die Reibkupplung mit einer Betätigungsvorrichtung betätigbar ist, und wobei eine Betätigungsflächenhöhe der Betätigungsfläche auf eine Soll-Betätigungsflächenhöhe eingestellt wird. Durch das vorgeschlagene Verfahren wird verhindert, dass die Betätigungsflächenhöhe aufgrund von Maßtoleranzen der einzelnen Komponenten der Reibkupplung schwankt. Durch die Einstellung der Betätigungsflächenhöhe auf die Soll-Betätigungsflächenhöhe muss in der Reibkupplung kein zusätzlicher Bauraum für einen Mehrweg der Betätigungsvorrichtung mehr vorgesehen werden, sodass die Reibkupplung besonders kompakt ausgestaltet werden kann. Bei der Betätigungsflächenhöhe kann es sich beispielsweise um einen Abstand der Betätigungsfläche von einer Stirnfläche einer Nabe der Reibkupplung in der axialen Richtung handeln. Für weitere Einzelheiten wird auf die Beschreibung der Reibkupplung verwiesen.

Die Einstellung der Betätigungsflächenhöhe kann durch eine Wahl einer abgestimmten Verbindungsmittellänge des zumindest einen Verbindungsmittels erfolgen. Bei der Verwendung von Nieten als Verbindungsmittel können beispielsweise Niete mit unterschiedlichen Bolzenbundlängen verwendet werden. Hierbei wird vor der Vernietung des Bolzens die sich aus den toleranzbehafteten Einzelkomponenten der Reibkupplung ergebende Vernietungshöhe bzw. Betätigungsflächenhöhe gemessen. Entsprechend der gewünschten Soll-Betätigungsflächenhöhe wird ein Bolzen als Niet verwendet, dessen Bundlänge auf die gemessenen Maßtoleranzen der Einzelkomponenten der Reibkupplung abgestimmt ist.

Die Einstellung der Betätigungsflächenhöhe kann durch Unterlegen des zumindest einen Verbindungsmittels mit zumindest einer Scheibe erfolgen. Die zumindest eine Scheibe kann beispielsweise ringförmig und/oder nach Art einer Unterlegscheibe ausgebildet sein. Weiterhin kann die zumindest eine Scheibe zwischen einen Nietkopf bzw. Schraubenkopf des zumindest einen Verbindungsmittels und einer Komponente der Reibkupplung, insbesondere dem Innenlamellenträger, angeordnet sein. Das zumindest eine Verbindungsmittel kann mit einer Mehrzahl von Scheiben und/oder mit Scheiben unterschiedlicher Scheibendicken (in der axialen Richtung) unterlegt werden, bis dass die Betätigungsflächenhöhe der Betätigungsfläche des zumindest einen Verbindungsmittel die Soll-Betätigungsflächenhöhe erreicht. Hierdurch können Niete verwendet werden, deren Bolzen die gleiche Bolzenbundlänge aufweisen. Die Bolzenbundlänge liegt dabei stets unter der erforderlichen Länge. Die Streuung der Betätigungsflächenhöhe wird dann durch das Unterlegen des zumindest ein Verbindungsmittels mit der zumindest einen Scheibe kompensiert.

Die Einstellung der Betätigungsflächenhöhe kann durch ein Stauchen des zumindest einen Verbindungsmittels erfolgen. Beim Stauchen wird beispielsweise ein Bolzen, insbesondere mit einem Stempel, durch Druck plastisch verformt und/oder in der axialen Richtung verkürzt. Dabei wird insbesondere ein Niet bzw. Bolzen verwendet, dessen Bolzenbundlänge größer ist als erforderlich. Weiterhin kann nach dem Vernieten des zumindest einen Verbindungsmittels das zumindest eine Verbindungsmittel in einem zweiten Nietprozess gezielt auf die Soll-Betätigungsflächenhöhe gestaucht werden. Zudem kann das zumindest eine Verbindungsmittel einen Stauchbereich aufweisen, der beispielsweise nach Art einer Verjüngung (in der radialen Richtung) ausgebildet sein kann. Hierdurch kann das Stauchen des zumindest einen Verbindungsmittels (in der axialen Richtung) mit einer geringeren Kraft erfolgen.

Die Einstellung der Betätigungsflächenhöhe kann durch ein Schrauben des zumindest einen Verbindungsmittels in ein Gewinde erfolgen. Hierzu kann das zumindest eine Verbindungsmittel insbesondere nach Art einer Schraube ausgebildet sein. Die Einstellung der Betätigungsflächenhöhe auf die Soll-Betätigungsflächenhöhe kann durch ein Schrauben des zumindest einen Verbindungsmittels in das Gewinde individuell eingestellt und so Schwankungen der Betätigungsflächenhöhe ausgeglichen werden.

Die Erfindung sowie das technische Umfeld wird nachfolgend anhand der Figur näher erläutert. Es ist darauf hinzuweisen, dass die Figur eine besonders bevorzugte Variante der Erfindung zeigt, diese jedoch nicht darauf beschränkt ist. Es zeigt beispielhaft und schematisch:

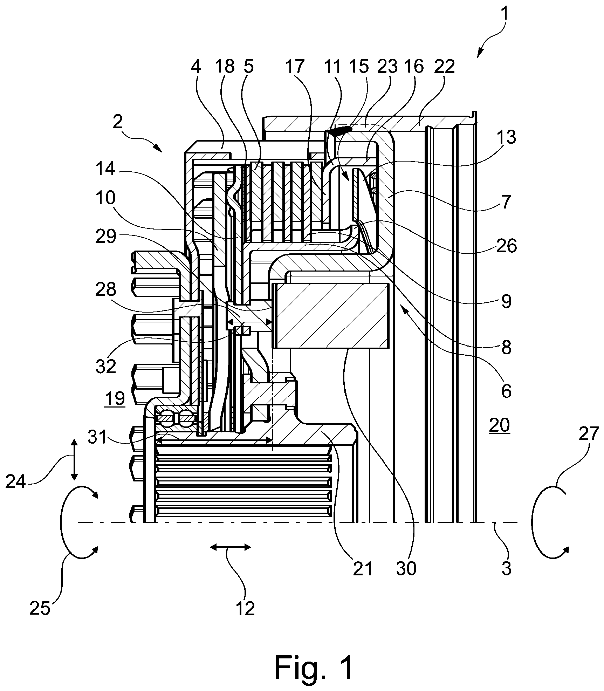

Fig. 1: eine Reibkupplung in einem Längsschnitt.

Die Fig. 1 zeigt eine Reibkupplung 1 im Längsschnitt. Insbesondere handelt es sich bei der Reibkupplung 1 um eine trockene Lamellenkupplung. Die Reibkupplung 1 weist ein auf einer Motorseite 19 angeordnetes Eingangsteil 2 und ein auf einer Getriebeseite 20 angeordnetes Ausgangsteil 6 auf. Das Eingangsteil 2 umfasst einen um eine Drehachse 3 durch einen hier nicht gezeigten Antriebsmotor bzw. Verbrennungsmotor drehbaren Außenlamellenträger 4, an dem vier Außenlamellen 5 verdrehfest über eine hier nicht gezeigte Verzahnung befestigt sind. Das Ausgangsteil 6 umfasst einen koaxial zu dem Außenlamellenträger 4 angeordneten und ebenfalls um die Drehachse 3 drehbaren Innenlamellenträger 8 auf, an dem vier Innenlamellen 9 verdrehfest über eine hier ebenfalls nicht gezeigte Verzahnung befestigt sind. Die Außenlamellen 5 und der Innenlamellenträger 9 sind durch eine Federeinrichtung 10, bei der es sich hier um eine Tellerfeder handelt, zum Schließen der Reibkupplung 1 verspannbar. Hierzu ist eine Anpresskraft der Federeinrichtung 10 über einen Drucktopf 14 und eine Modulationsfeder 18 auf den Innenlamellenträger 8 leitbar. Die Anpresskraft wird durch eine Abstandslamelle 11 abgestützt. Die Abstandslamelle 11 ist ringförmig ausgebildet und weist einen rohrförmigen Abschnitt 16 und einen flanschartigen Abschnitt 17 auf. Weiterhin beabstandet die Abstandslamelle 11 die Außenlamellen 5 und die Innenlamellen 9 in einer axialen Richtung 12, d. h. parallel zu der Drehachse 3, von einem Rotorträger 7 des Ausgangsteils 6. Zudem bildet die Abstandslamelle 11 einen Aufnahmeraum 15 für eine Mehrzahl von Blattfedern 13. Die Mehrzahl von Blattfedern 13 sind in einer Umfangsrichtung 25 um die Drehachse 3 verteilt angeordnet und erstrecken sich jeweils von einem in eine radiale Richtung 24 orientierten Kragen 26 des Innenlamellenträgers 8, der hier nur teilweise dargestellt ist, in der Umfangsrichtung 25 und der axialen Richtung 12 zu dem Rotorträger 7. Die Blattfedern 13 sind an einem ersten längsseitigen Ende der Blattfedern 13 mit dem Innenlamellenträger 8 und mit einem gegenüberliegenden zweiten längsseitigen Ende der Blattfedern 13 mit dem Rotorträger 7 vernietet. Hierdurch ist bei geschlossener Reibkupplung 1 ein Drehmoment eines Antriebsmotors über den Außenlamellenträger 4, die Außenlamellen 5, die Innenlamellen 9, den Innenlamellenträger 8 und die Blattfedern 13 auf den Rotorträger 7 übertragbar.

Die Blattfedern 13 sind zwischen dem Innenlamellenträger 8 und dem Rotorträger 7 aufgestellt bzw. mit einem Aufstellwinkel angeordnet, sodass das über den Innenlamellenträger 8 in die Blattfedern 13 als Zugkraft eingeleitete Drehmoment eine Kraft mit einer axialen Richtungskomponente erzeugt. Die axiale Richtungskomponente der Kraft stellt eine Verstärkungskraft dar, die in der axialen Richtung 12 in Richtung der Getriebeseite 20 auf den Innenlamellenträger 8 wirkt, sodass die Anpresskraft der Federeinrichtung 10 verstärkt und Anpresskraftverluste kompensiert werden. Die Reibkupplung 1 dreht von der Getriebeseite 20 aus betrachtet in eine Drehrichtung 27 gegen den Uhrzeigersinn um die Drehachse 3, wodurch die Blattfedern 13 auf Zug belasten werden, um die Verstärkungsfunktion der Blattfedern 13 zu nutzen. Wenn ein Drehmoment in der Drehrichtung 27 durch den nicht dargestellten Verbrennungsmotor von der Motorseite 19 kommend über den Außenlamellenträger 4 und die Außenlamellen 5 bei eingerückter Reibkupplung 1 auf die Innenlamellen 9 und den Innenlamellenträger 8 eingeleitet wird, sorgt das Drehmoment in der Drehrichtung 27 dafür, dass der Reibschluss zwischen Außenlamellen 5 und Innenlamellen 9 durch die auf Zug beanspruchten, aufgestellten Blattfedern 13 verstärkt wird, da der Kragen 26 des in axialer Richtung 12 verlagerbaren Innenlamellenträgers 8 in Richtung des Rotorträgers 7 gezogen wird. Somit steigt die Drehmomentkapazität der Reibkupplung 1, wodurch die Reibkupplung 1 kleiner ausgelegt werden kann, als dies ohne Verstärkungsfunktion der Blattfedern 13 der Fall gewesen wäre. Anders ausgedrückt, sind durch die Verstärkungsfunktion der Blattfedern 13 Anpresskraftverluste kompensierbar.

Der Drucktopf 14 ist ringförmig ausgebildet und radial innen mit einer Mehrzahl von in der Umfangsrichtung 25 verteilt angeordneten Verbindungsmittel 28, die hier nach Art von Nieten ausgebildet sind, mit dem Innenlamellenträger 8 verdrehfest verbunden. Die Verbindungsmittel 28 weisen in der axialen Richtung 12 eine Verbindungsmittellänge 32 auf. Weiterhin bildet eine Stirnfläche des Verbindungsmittels 28 an einem in der axialen Richtung 12 längsseitigen Ende des Verbindungsmittels 28 eine Betätigungsfläche 29, über die durch eine hier lediglich schematisch dargestellte Betätigungsvorrichtung 30 entgegen der Anpresskraft der Federeinrichtung 10 zum Ausrücken der Reibkupplung 1 in Richtung der Motorseite 19 eine Betätigungskraft einleitbar ist. Die Betätigungsvorrichtung 30 ist zumindest teilweise in der radialen Richtung 24 innerhalb des Rotorträgers 7 angeordnet. Die Betätigungsvorrichtung 30 kontaktiert die Betätigungsfläche 29 unmittelbar. Die Betätigungsfläche 29 weist eine Betätigungsflächenhöhe 31 auf, bei der es sich hier um einen Abstand der Betätigungsfläche 29 von einer motorseitigen Stirnfläche einer Nabe 21 der Reibkupplung 1 in der axialen Richtung 12 handelt. Die Betätigungsflächenhöhe 31 wurde hier durch ein Stauchen des Verbindungsmittels 28 in der axialen Richtung 12 auf eine Soll-Betätigungsflächenhöhe eingestellt. Alternativ oder kumulativ ist der Rotorträger 7 durch einen Rotor 22 eines hier nicht weiter gezeigten Elektromotors um die Drehachse 3 drehbar. Hierzu ist der Rotorträger 7 über seine Umfangsfläche 23 mit dem Rotor 22 verdrehfest verbunden. Der Rotorträger 7 ist zudem verdrehfest mit der Nabe 21 verbunden, sodass die Nabe 21 mit dem Rotorträger 7 um die Drehachse 3 drehbar ist.

Insbesondere ist die Reibkupplung 1, genauer gesagt die trockene Lamellenkupplung, in ein nichtdargestelltes Hybridmodul zum An- und Abkoppeln eines Verbrennungsmotors an den und vom Antriebsstrang eines Kraftfahrzeugs ausgebildet, d.h. die Reibkupplung 1 bildet eine K0-Kupplung. Bei dem Hybridmodul kann es sich um ein Hybridmodul mit koaxialem Elektromotor, dessen Rotor die K0-Kupplung umgibt, oder um ein Hybridmodul mit achsparallelem Elektromotor, der eine Riemenscheibe antreibt, die die K0-Kupplung umgibt, handeln. Im letztgenannten Fall ist diese Riemenscheibe aus dem Rotorträger 7 und dem Rotor 22 einteilig ausgebildet, oder die Riemenscheibe wird vom Rotorträger 7 getragen, d.h. ist in dessen Außenumfang auf den Rotorträger 7 aufgezogen.

### Bezugszeichenliste

- 1: Reibkupplung
- 2: Eingangsteil
- 3: Drehachse
- 4: Außenlamellenträger
- 5: Außenlamelle
- 6: Ausgangsteil
- 7: Rotorträger
- 8: Innenlamellenträger
- 9: Innenlamelle
- 10: Federeinrichtung
- 11: Abstandslamelle
- 12: axiale Richtung
- 13: Blattfeder
- 14: Drucktopf
- 15: Aufnahmeraum
- 16: rohrförmige Abschnitt
- 17: flanschartiger Abschnitt
- 18: Modulationsfeder
- 19: Motorseite
- 20: Getriebeseite
- 21: Nabe
- 22: Rotor
- 23: Umfangsfläche
- 24: radiale Richtung
- 25: Umfangsrichtung
- 26: Kragen
- 27: Drehrichtung
- 28: Verbindungsmittel
- 29: Betätigungsfläche
- 30: Betätigungsvorrichtung
- 31: Betätigungsflächenhöhe
- 32: Verbindungsmittellänge

## Patentansprüche

1. Reibkupplung (1) für einen Antriebsstrang eines Kraftfahrzeugs, aufweisend:
- ein Eingangsteil (2) mit einem durch zumindest einen Antriebsmotor um eine Drehachse (3) drehbaren Außenlamellenträger (4), wobei an dem Außenlamellenträger (4) zumindest eine Außenlamelle (5) befestigt ist;
- ein Ausgangsteil (6) mit einem Rotorträger (7) und einem von dem Rotorträger (7) getrennten Innenlamellenträger (8), wobei an dem Innenlamellenträger (8) zumindest eine Innenlamelle (9) befestigt ist;
- zumindest eine Federeinrichtung (10), mit der die zumindest eine Außenlamelle (5) und die zumindest eine Innenlamelle (9) zum Schließen der Reibkupplung (1) mit einer Anpresskraft verspannbar sind; **dadurch gekennzeichnet, dass** die Reibungskupplung einen Drucktopf (14) aufweist, der mit zumindest einem Verbindungsmittel (28) mit dem Innenlamellenträger (8) verbunden ist, wobei das zumindest eine Verbindungsmittel (28) eine Betätigungsfläche (29) aufweist, über die die Reibkupplung (1) mit einer Betätigungsvorrichtung (30) betätigbar ist.

2. Reibkupplung (1) nach Anspruch 1, ferner aufweisend:
- eine Abstandslamelle (11), mittels der die zumindest eine Außenlamelle (5) und die zumindest eine Innenlamelle (9) in einer axialen Richtung (12) von dem Rotorträger (7) beabstandet sind; und
- zumindest eine Blattfeder (13), die mit dem Innenlamellenträger (8) und dem Rotorträger (7) derart verbunden ist, dass die zumindest eine Blattfeder (13) bei Einleitung eines Drehmoments durch den Antriebsmotor die Anpresskraft mit einer Verstärkungskraft verstärkt.

3. Reibkupplung (1) nach einem der vorhergehenden Ansprüche, wobei es sich bei dem zumindest einem Verbindungsmittel (28) um einen Niet oder eine Schraube handelt.

4. Reibkupplung (1) nach einem der vorhergehenden Ansprüche, wobei die Betätigungsfläche (29) orthogonal zu der Drehachse (3) verläuft.

5. Reibkupplung (1) nach einem der vorhergehenden Ansprüche, wobei die Betätigungsfläche (29) eine Betätigungsflächenhöhe (31) aufweist, die einstellbar ist.

6. Verfahren zur Herstellung einer Reibkupplung (1) nach einem der vorhergehenden Ansprüche, wobei ein Drucktopf (14) mit einem Innenlamellenträger (8) über zumindest ein Verbindungsmittel (28) verbunden ist, wobei das zumindest eine Verbindungsmittel (28) eine Betätigungsfläche (29) aufweist, über die die Reibkupplung (1) mit einer Betätigungsvorrichtung (30) betätigbar ist, und wobei eine Betätigungsflächenhöhe (31) der Betätigungsfläche auf eine Soll-Betätigungsflächenhöhe eingestellt wird.

7. Verfahren nach Anspruch 6, wobei die Einstellung der Betätigungsflächenhöhe (31) durch eine Wahl einer abgestimmten Verbindungsmittellänge (32) des zumindest einen Verbindungsmittels (28) erfolgt.

8. Verfahren nach Anspruch 6 oder 7, wobei die Einstellung der Betätigungsflächenhöhe (31) durch Unterlegen des zumindest einen Verbindungsmittels (28) mit zumindest einer Scheibe erfolgt.

9. Verfahren nach einem der Ansprüche 6 bis 8, wobei die Einstellung der Betätigungsflächenhöhe (31) durch ein Stauchen des zumindest einen Verbindungsmittels (28) erfolgt.

10. Verfahren nach einem der Ansprüche 6 bis 9, wobei die Einstellung der Betätigungsflächenhöhe (31) durch ein Schrauben des zumindest einen Verbindungsmittels (28) in ein Gewinde erfolgt.

## Claims

1. A friction clutch (1) for a drivetrain of a motor vehicle, having:
- an input part (2) with an outer-plate carrier (4) rotatable about an axis of rotation (3) by at least one drive motor, wherein at least one outer plate (5) is attached to the outer-plate carrier (4);
- an output part (6) with a rotor carrier (7) and an inner-plate carrier (8) separated from the rotor carrier (7), wherein at least one inner plate (9) is attached to the inner-plate carrier (8);
- at least one spring device (10) by means of which the at least one outer plate (5) and the at least one inner plate (9) can be braced with a pressing force for closing the friction clutch (1); **characterised in that** the friction clutch has a pressure pot (14) which is connected to the inner-plate carrier (8) by at least one connecting means (28), wherein the at least one connecting means (28) has an actuating surface (29) via which the friction clutch (1) can be actuated with an actuating apparatus (30).

2. The friction clutch (1) according to claim 1, further having:
- a spacer plate (11), by means of which the at least one outer plate (5) and the at least one inner plate (9) are spaced apart from the rotor carrier (7) in an axial direction (12); and
- at least one leaf spring (13) which is connected to the inner-plate carrier (8) and the rotor carrier (7) in such a way that the at least one leaf spring (13) increases the pressing force with a reinforcing force when a torque is introduced by the drive motor.

3. The friction clutch (1) according to one of the preceding claims, wherein the at least one connecting means (28) is a rivet or a screw.

4. The friction clutch (1) according to one of the preceding claims, wherein the actuating surface (29) runs orthogonally to the axis of rotation (3).

5. The friction clutch (1) according to one of the preceding claims, wherein the actuating surface (29) has an actuating surface height (31) which is adjustable.

6. A method for producing a friction clutch (1) according to one of the preceding claims, wherein a pressure pot (14) is connected to an inner-plate carrier (8) via at least one connecting means (28), wherein the at least one connecting means (28) has an actuating surface (29), via which the friction clutch (1) can be actuated with an actuating apparatus (30), and wherein an actuating surface height (31) of the actuating surface is adjusted to a target actuating surface height.

7. The method according to claim 6, wherein the adjustment of the actuating surface height (31) is carried out by selecting a coordinated connecting means length (32) of the at least one connecting means (28).

8. The method according to claim 6 or 7, wherein the adjustment of the actuating surface height (31) is carried out by placing at least one disc underneath the at least one connecting means (28).

9. The method according to one of claims 6 to 8, wherein the adjustment of the actuating surface height (31) is carried out by compressing the at least one connecting means (28).

10. The method according to one of claims 6 to 9, wherein the adjustment of the actuating surface height (31) is carried out by screwing the at least one connecting means (28) into a thread.

## Revendications

1. Embrayage à friction (1) pour une chaîne cinématique d'un véhicule automobile, comprenant :
- une partie d'entrée (2) dotée d'un support de disque extérieur (4) pouvant tourner autour d'un axe de rotation (3) au moyen d'au moins un moteur d'entraînement, au moins un disque extérieur (5) étant fixé au support de disque extérieur (4) ;
- une partie de sortie (6) dotée d'un support de rotor (7) et d'un support de disque intérieur (8) séparé du support de rotor (7), au moins un disque intérieur (9) étant fixé au support de disque intérieur (8) ;
- au moins un dispositif à ressort (10) avec lequel le au moins un disque extérieur (5) et le au moins un disque intérieur (9) peuvent être maintenus avec une force de pression pour fermer l'embrayage à friction (1) ; **caractérisé en ce que** l'embrayage à friction présente un pot à pression (14) qui est relié au support de disque intérieur (8) par au moins un moyen de connexion (28), le au moins un moyen de connexion (28) présentant une surface d'actionnement (29) par le biais de laquelle l'embrayage à friction (1) peut être actionné avec un dispositif d'actionnement (30).

2. Embrayage à friction (1) selon la revendication 1, comprenant en outre :
- un disque d'espacement (11), au moyen duquel le au moins un disque extérieur (5) et le au moins un disque intérieur (9) sont espacés du support de rotor (7) dans une direction axiale (12) ; et
- au moins un ressort à lame (13), relié au support de disque intérieur (8) et au support de rotor (7) de telle sorte que le au moins un ressort à lame (13) augmente la force de pression avec une force de renforcement en introduisant un couple par le biais du moteur d'entraînement.

3. Embrayage à friction (1) selon l'une quelconque des revendications précédentes, dans lequel le au moins un moyen de connexion (28) est un rivet ou une vis.

4. Embrayage à friction (1) selon l'une quelconque des revendications précédentes, dans lequel la surface d'actionnement (29) s'étend orthogonalement à l'axe de rotation (3).

5. Embrayage à friction (1) selon l'une quelconque des revendications précédentes, dans lequel la surface d'actionnement (29) présente une hauteur de surface d'actionnement (31) réglable.

6. Procédé de fabrication d'un embrayage à friction (1) selon l'une quelconque des revendications précédentes, dans lequel un pot à pression (14) est relié à un support de disque intérieur (8) par le biais d'au moins un moyen de connexion (28), le au moins un moyen de connexion (28) présentant une surface d'actionnement (29), par le biais de laquelle l'embrayage à friction (1) peut être actionné avec un dispositif d'actionnement (30) et dans lequel une hauteur de surface d'actionnement (31) de la surface d'actionnement est réglée sur une hauteur cible de surface d'actionnement.

7. Procédé selon la revendication 6, dans lequel le réglage de la hauteur de la surface d'actionnement (31) est effectué en sélectionnant une longueur de moyen de connexion (32) correspondante du au moins un moyen de connexion (28).

8. Procédé selon la revendication 6 ou 7, dans lequel le réglage de la hauteur de la surface d'actionnement (31) est effectué en plaçant au moins une rondelle sous le au moins un moyen de connexion (28).

9. Procédé selon l'une quelconque des revendications 6 à 8, dans lequel le réglage de la hauteur de la surface d'actionnement (31) s'effectue par compression du au moins un moyen de connexion (28).

10. Procédé selon l'une quelconque des revendications 6 à 9, dans lequel le réglage de la hauteur de la surface d'actionnement (31) s'effectue par vissage du au moins un moyen de connexion (28) dans un filetage.
